# EUROPEAN PATENT SPECIFICATION

(11) **EP 1 524 449 B1**
(45) Date of publication and mention of the grant of the patent: **02.04.2008**
(21) Application number: 04256261.1
(22) Date of filing: 08.10.2004
(51) Int. Cl.: F16D 65/38, F16D 66/00, F16D 65/20

(54) **A control system and method for the running clearance of a disc brake.**
System und Verfahren zur Steuerung des Lüftspiels bei Scheibenbremsen.
Système et procédé de commande pour le jeu fonctionnel de freins à disques.

(30) Priority: 16.10.2003 GB 0324243
(43) Date of publication of application: 20.04.2005
(73) Proprietor: Meritor Heavy Vehicle Braking Systems (UK) Limited, Cwmbran, Gwent NP44 3XU (GB)
(72) Inventor: Taylor, Martin P., Cwmbran, Torfaen NP44 3ND (GB); Norman, Mark A., Mid Glamorgan, South Wales CF31 3LB (GB)
(74) Representative: Foot, Paul Matthew James

(56) References cited:
- WO-A-02/088562
- WO-A-03/033931
- WO-A-03/082651
- DE-A- 10 305 702
- US-B1- 6 237 729

## Description

The present invention is concerned with a control system and control method for a disc brake, in particular an adjuster mechanism of a disc brake.

It is already well known to provide an electric motor to control the running clearance of friction linings relative to a brake rotor based upon signals from sensors monitoring the clearance take-up movement and brake actuation stroke. The known systems tend to mimic the mechanical operation of a conventional brake clearance control device known as an "automatic adjuster". In such adjusters, a clutch having some degree of lost motion is provided where the level of free motion is equivalent to the maximum allowable running clearance. Should the friction linings wear such that the running clearance is greater than this maximum allowable clearance, upon operation of the brake, the free running clearance is "taken-up" and the further additional free movement, caused by the excess lining clearance causes the clutch to rotate. The rotation has the effect of moving the backstop or datum position for the return of the friction lining, thus progressively advancing the lining towards the brake rotor as the friction lining wears. When the friction linings contact the rotor, the increased load in the system causes the clutch to slip, preventing further unwanted adjustment and/or overloading of the adjuster. Such mechanical automatic adjusters are well known in the art.

In a brake of the kind envisaged by the present invention, it is important to reduce weight, power consumption (whether electrical or pneumatic) and material costs. Unfortunately, in a conventional brake, having an automatic adjuster of the mechanical kind or even an electric adjuster that mimics the mechanical operation, the strength of the mechanisms associated with the adjuster has to be extremely high. The reason for this is that the actual brake adjustment takes place only whilst the brake is being applied rather than during brake release. It is common in brakes of the "sliding caliper" type described for load to be applied directly on one side only. The caliper frame slides to apply load to the other side of the rotor. This load is present before both friction linings are fully in contact with rotor. Therefore the adjuster drive train has to be capable of driving through this load.

It is also known from EP0995923 (Meritor Automotive, Inc) to use a pressure sensor disposed at the input end of the operating shaft ("op-shaft") of a disc brake to determine when operation of the brake occurs and running clearance is taken-up. The position of the op-shaft when running clearance has been taken up is measured such that upon brake release, the electric motor driven adjuster mechanism may move the datum position for the return of the friction lining to maintain a constant running clearance as the friction lining wears. Further wear sensing arrangements are disclosed in DE10305702 (Knorr-Bremse) and US6237729 (Blattert).

The present invention seeks to overcome, or at least mitigate, the problems of the prior art.

One aspect of the present invention provides a control system for a disc brake adjuster mechanism, according to claim 1 appended .hereto. Preferred features of the control system are disclosed in the claims depending therefrom.

Another aspect of the present invention provides a method of determining the displacement of a brake at which a predetermined load on a friction lining is achieved, according to claim 8 appended hereto. Preferred features of the method are disclosed in the claims depending therefrom.

The invention is described further hereinafter, by way of example only, with reference to the accompanying drawings, in which:-
Figure 1 is a partially sectioned plan view of one embodiment of a brake in accordance with the present invention;
Figure 2 is an enlarged detail of Figure 1 showing a motor and gearbox installation;
Figure 3 is a cross-sectional view along the line 3-3 of Figure 1;
Figure 4 is a schematic diagram illustrating the electronic components of the control system;
Figures 5 and 6 are flowcharts showing an adjustment method according to one embodiment of the present invention;
Figure 6 is a flowchart showing an adjustment method according to another embodiment of the present invention;

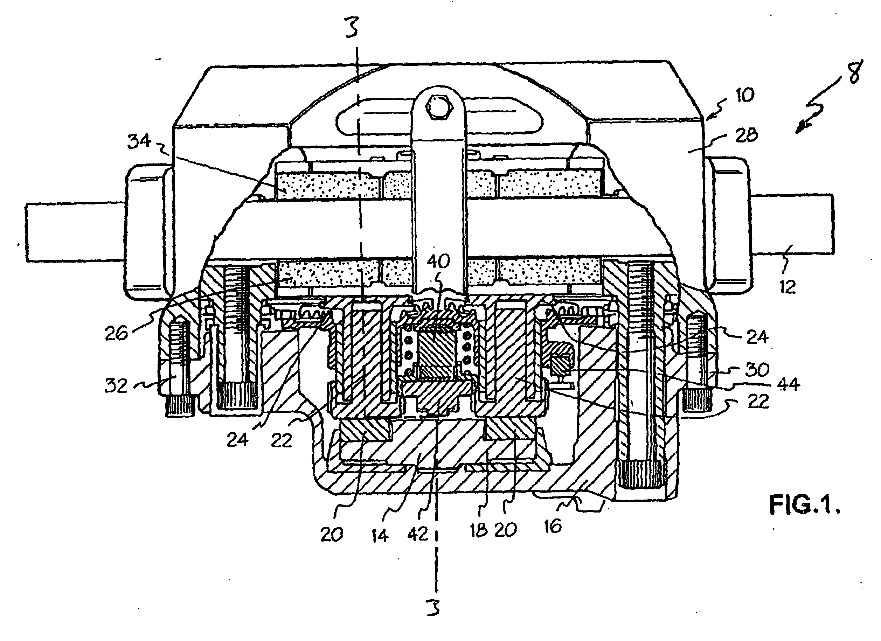

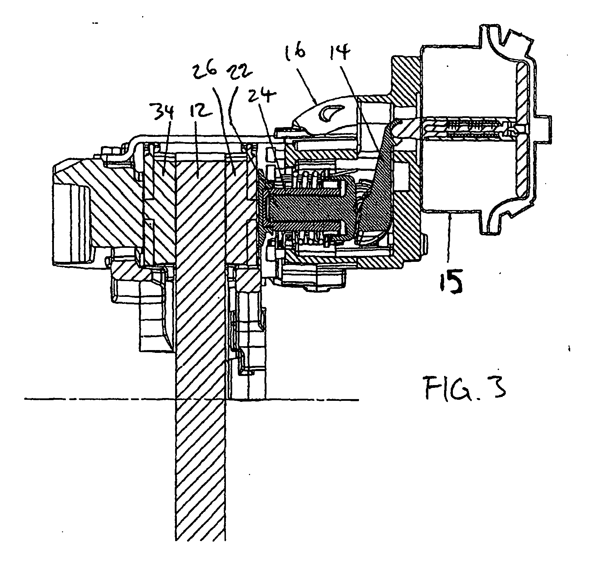

The brake 8 of Fig. 1 is of the type comprising a caliper housing 10 that straddles a disc or rotor 12 mounted on an axle of the vehicle to be braked (not shown). The brake is actuated by mechanical movement of an input actuator such as an air cylinder (15, Figure 3). Such actuators are well known in the field of brake actuation. The actuator co-operates with the outer end of the operating shaft or 'op-shaft' 14 of the brake 8. The inner end of the op-shaft 14 is carried in a bearing attached to the lower end of inner housing part 16. The inner end of the op-shaft 14 has a pocket positioned eccentric to the op-shaft axis of rotation which, upon rotation, causes a reaction force to be transmitted to rollers 20. The rollers 20 in turn transmit the applied load to a pair of spaced inner tappet members 22. These inner tappet members 22 are screwed into engagement with associated outer tappet members 24 which apply the input load from the actuator to the rear of the inner braking lining 26, thus pressing the friction material of the inner friction lining 26 into frictional engagement with the disc 12.

A reaction force is generated through this frictional engagement between the disc 12 and inner braking lining 26, that is fed back through the tappets 22 and 24, rollers 20 and op-shaft 14 which is supported by the inner housing part 16. The inner housing part 16 is secured to an outer housing part 28 by bridging bolts 30 and 32. Thus the applied force being generated by movement of the op-shaft 14 is ultimately transmitted by reaction means to the outer housing part 28 which in turn presses the outer friction lining 34 into frictional engagement with the disc 12. Therefore, the disc 12, upon movement of the op-shaft 14, is clamped between the inner and outer friction linings 26 and 34 to generate a braking force for braking the vehicle under control of the applied input movement.

As shown in Fig. 1, the brake also includes an electric motor 40 adapted to drive via a reduction gearbox 42, shown here by way of example as a multi-stage planetary gearbox, a part of the telescopic tappet assembly that, upon rotation, acts to increase or reduce the overall length of the tappet assembly in accordance with the direction of rotation of the motor. Such extension or contraction adjusts the rest position of the brake applying member and therefore the clearance available between the friction linings and the brake rotor disc. The motor 40, gearbox 42 and tappet members 22 and 24 together constitute an adjuster mechanism of the brake

Also shown is a rotary encoder 44 that is driven from a part of the tappet assembly that moves upon adjustment. The encoder produces a signal which is arranged to be processed in an Electronic Control Unit (ECU) 80 where the output from the encoder is accumulated to provide a measure of the total position and therefore total movement of the adjustment mechanism, this output being proportional to the actual wear condition of the friction linings.

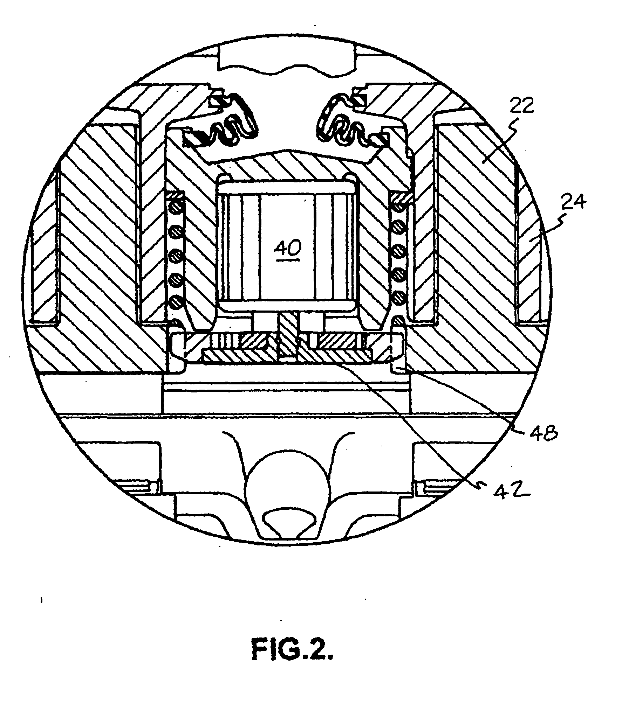

As discussed in more detail below, once it has been determined that the brakes have been released, the clearance data obtained is used by the ECU 80 to determine whether an adjustment of the clearance is required. If such an adjustment is required then the motor 40 is driven to the new position. As can be seen from figure 2, the motor output drives through a cycloid gearbox assembly 42 onto a gear form 48 associated with the inner tappet member 22. The inner tappet member 22 is threadedly engaged with the outer tappet member 24 which is held against rotation. Rotation of the inner tappet member causes the overall tappet assembly to either extend or contract. It should be appreciated that the torque required to drive the tappet assembly to produce the aforementioned effect is substantially lower when the tappet assembly is not under any substantial axial loading as the friction level is drastically reduced between the two threaded members. In view of the fact that the torque required to produce the adjustment movement is substantially small with respect to that had the brakes been applied, the gearbox and tappet drives can now be produced from a material that is substantially lighter.

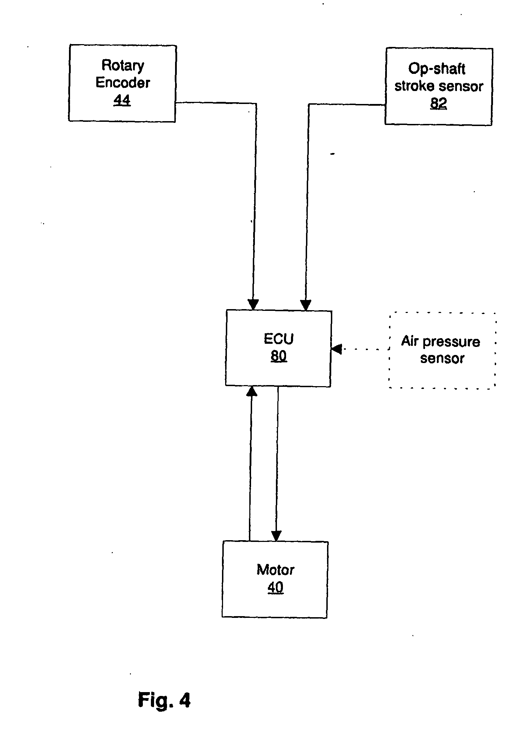

Figure 4 illustrates schematically the electrical components of the control system. It is apparent that at the heart of the system is ECU 80 that receives signals from the rotary encoder 44 and an op-shaft stroke sensor 82, and, in for the method of the second embodiment, an air pressure sensor 84 (shown in broken lines). The ECU 80 in turn may signal the driving of motor 40, and may receive signals from the motor or elsewhere on a motor drive circuit regarding the amount of current passing therethrough. The stroke sensor may be any suitable type of contacting or noncontacting sensor.

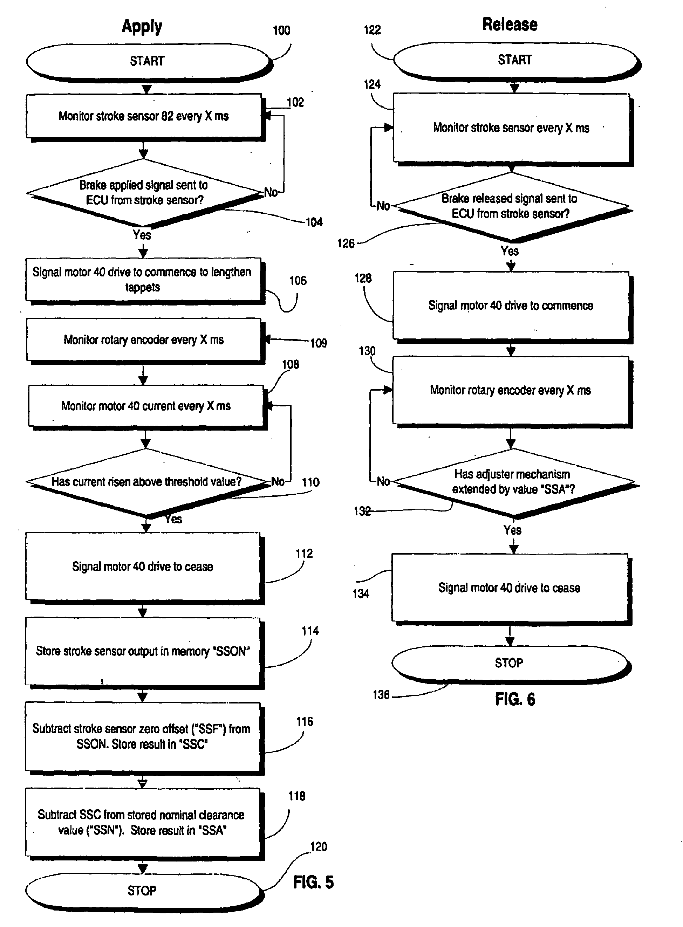

Referring to Figures 5 and 6 one embodiment of the method of operation of the control system is illustrated in the flowcharts of these figures. The method operates as follows: Operation starts at step 100, and the system begins by monitoring the output of op-shaft stroke sensor 82 at predetermined intervals at step 102. At step 104 the ECU 80 determines whether the signal from the stroke sensor 82 has reached a threshold value that indicates that the brake has been applied. If it has, at step 106 the ECU signals the motor 40 to lengthen the brake tappets. The ECU 80 then begins to monitor the current flowing through motor 140 at predetermined intervals and at step 110 senses when the current has increased above a predetermined threshold value (which is indicative of the motor stalling). Once this occurs, the ECU 80 then signals motor drive to cease so that motor 40 is no longer seeking to extend the tappets. At step 114 the ECU stores the stroke sensor output in a memory "SSON" and at step 116 subtracts the stroke sensor zero offset value "SSF" (i.e. a stroke sensor reading when the op-shaft 14 is in a released rest position) from SSON. This value is then stored in memory "SSC". At step 118, value SSC is then subtracted from a stored nominal clearance value "SSN" (i.e. the desired clearance value of disc to lining with the brake released) to equate to the amount of adjustment required to restore the clearance to the desired nominal clearance. This value is stored in memory "SSA" before the sequence of steps stops at 120.

Referring now to Figure 6, the sequence of steps starts at 122 with the brake applied. Again, the ECU 80 monitors the stroke sensor 82 at predetermined intervals at step 124 and determines whether the brake has been released in response to the stroke sensor 82 providing a predetermined signal. Once this has occurred, the ECU 80 signals motor 40 drive to commence at step 128 in order to lengthen the tappets and monitors the extension of the tappets via the rotary encoder 44 until the tappets have been extended by a value equivalent to SSA, at which the ECU 80 signals motor drive to cease and the adjustment cycle stops at step 136.

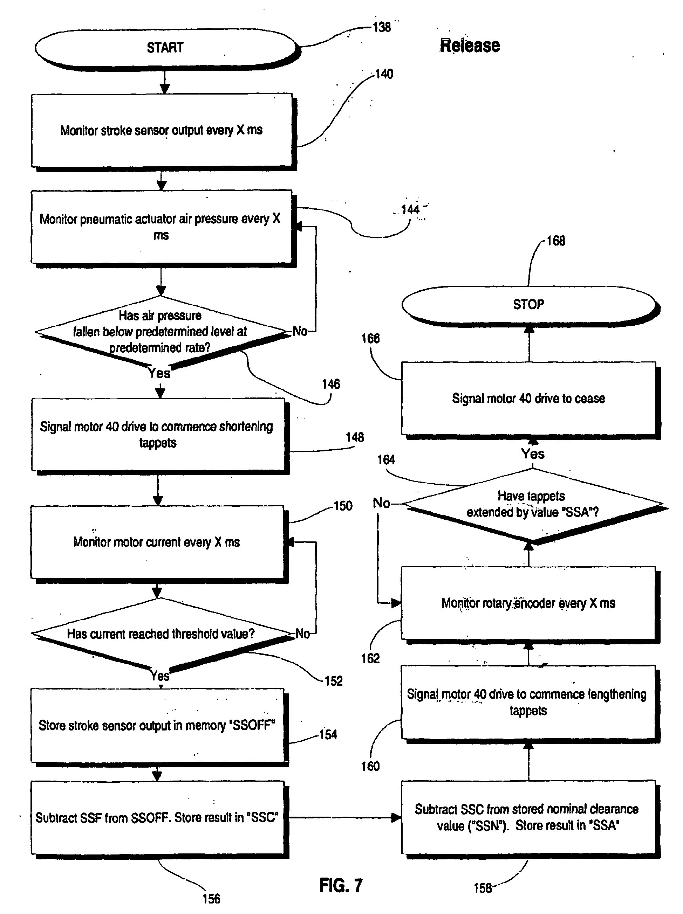

Figure 7 illustrates a control system and adjustment method according to a second embodiment of the present invention in which both measurement of the required amount of adjustment and the lengthening of the tappets occurs during the release of the brake.

The sequence starts at step 138 and begins by monitoring the stroke sensor output at predetermined intervals at step 140. To determine when a brake is released, the ECU 80 monitors the air pressure in pneumatic actuator 15 using the air pressure sensor 84 at step 144, and at step 146 determines that the brake is being released, once the air pressure has fallen below a predetermined level at a predetermined rate. At step 148 the ECU 80 signals the motor 40 to shorten the tappets. However, at this point, the motor torque is insufficient to overcome friction induced by the force passing through the tappets to the friction lining, causing the motor 40 to stall. The ECU 80 monitors the motor current at predetermined intervals at step 150 so it can determine when the current through the motor has dropped to a predetermined threshold value that indicates that the torque of the motor 40 is sufficient to drive the tappets. At the point that the motor drive starts, the ECU stores the stroke sensor output in memory SSOFF at step 154 before subtracting SSF (i.e. a stroke sensor reading when the op-shaft 14 is in a released rest position) from SSOFF at step 156 to give a value SSC which is stored in memory.

To give the total amount by which the tappets should be adjusted, SSC is subtracted from a stored nominal clearance value SSN (e.g 0.25mm). The result is stored in memory SSA and equates to the amount by which the tappet members 22, 24 must be extended to return the brake to the correct running clearance. To do this, the ECU 80 signals motor 40 to drive to commence lengthening of the tappets and monitors the position of the rotary encoder 44 at predetermined intervals until the ECU determines that the tappets have extended by amount SSA. Once the tappets 22, 24 have extended by this amount, the ECU signals the motor to cease driving and the adjustment procedure stops at step 168.

One advantage of this adjustment method is that the stroke sensor outputs SSON and SSOFF are measured at the end of the brake application cycle when the brake rotor and friction linings 26, 34 may be heated and have therefore expanded. Thus, the danger of "over adjustment" on the basis of values measured when the rotor 12 and linings 26, 34 are cold does not arise and the brake clearance is correctly set for the brakes when hot.

It should be appreciated that as an alternative to measuring motor current, the point at which the tappets come out of contact with the friction linings may be determined directly or indirectly from rotation of the drive motor 40, gears 46, or inner tappet members 22.

The ECU may be programmed to only carry out the adjustment intermittently (e.g. every tenth brake application). Rather than seeking to correct the clearance fully each time it is determined that adjustment is needed, the ECU may be programmed to signal the motor to drive a fixed increment for each brake application, so the correct adjustment is only achieved after more than one brake application.

The output from the tappet driven wear-out sensor or encoder 44 may be recorded or accumulated to provide a signal indicative of the worn condition of the friction linings.

Should the signal from the wear-out sensor 44 determine that a lining change is required, then an alarm or other indication could then be issued. De-adjustment of the brake or retraction of the brake applying members is then instigated through use of an electrical or electronic switch (not shown). Once activated, the system determines whether the vehicle is in a correct condition to allow the brake to be 'opened' i.e. stationary. If this condition is satisfied then the electric motor 40 is energised so as to cause the brake-applying members to retract from the brake rotor 12. As the brake is no longer in correct adjustment, a flag is set so as to indicate to the ECU 80 that an adjustment is required.

After re-assembly of the brake, the out-of-adjustment flag is recognised and the brake is re-adjusted.

It should also be appreciated that the same principles may be applied to other forms of this brake that are not of the sliding caliper type. The invention may also be applied to electromechanical brakes in which an electric motor replaces the air actuator. In brakes of this type, the electric motor may, as well as supplying a braking force, also carry out adjustments to maintain the correct running clearance. Whilst the present invention has been shown and described with reference to a preferred embodiment it will be understood by those skilled in the art that various changes in form and detail may be made therein without departing from the scope of the invention. Consequently, these and other modifications are contemplated to be within the scope of the invention.

## Claims

1. A control system for a disc brake (8) adjuster mechanism, the system comprising:
an electric adjuster motor (40) for operable connection to an adjuster mechanism for driving a friction lining (26) towards and away from a disc brake rotor (12) to maintain a predetermined running clearance between a rotor and a friction lining when a brake is not applied;
a displacement measuring means (82) ; and
a controller (80), the controller being programmed to determine the brake displacement at which a predetermined load on a friction lining is achieved due to the contact with the rotor, the predetermined load being determined from a parameter of the electric adjuster motor,
wherein the system is programmed to measure the brake displacement whilst the brake is being released; **characterised in that** the predetermined load is determined from a motor current parameter of the electric adjuster motor.

2. A system according to claim 1 wherein the brake displacement measuring means is a stroke sensor (82) for measuring the displacement of an operating shaft of a brake.

3. A system according to any preceding claim further comprising a release sensor to determine when brake release commences.

4. A system according to any preceding claim which is programmed to signal the motor to drive once the brake is released so as to adjust the running clearance.

5. A system according to claim 4 further comprising an adjuster mechanism measuring means (44) to monitor the amount of adjustment applied by the motor.

6. A system according to any preceding claim programmed so as to carry out adjustment being on a pre-determined proportion of brake applications, the proportion being less than one.

7. A brake incorporating a system according to any preceding claim.

8. A method of determining the displacement of a brake (8) at which a predetermined load on a friction lining is achieved, the brake comprising a brake actuator (15), friction lining (26), rotor (12), brake displacement sensor (82), a controller (80) and an adjuster mechanism including an electric adjuster motor (40), the method comprising the steps of:
i) signalling drive to the motor whilst there is a force acting between the rotor and the friction lining during release of the brake;
ii) monitoring current of the motor whilst the brake is being released in order to determine whether a predetermined load on the friction lining is achieved; and
iii) determining the brake displacement at which the load is achieved.

9. A method according to claim 8 further comprising a step comparing the brake displacement at the predetermined load with brake displacement at a rest or no-load state to determine the amount of brake adjustment required to achieve a predetermined running clearance between the rotor and friction lining.

10. A method according to claim 9 further comprising a step of signalling the motor to adjust the adjuster mechanism to restore the predetermined running clearance once the brake is fully released.

## Patentansprüche

1. Steuersystem für einen Einstellmechanismus für Scheibenbremsen (8), wobei das System umfasst:
einen elektrischen Einstellmotor (40) zur antreibbaren Verbindung mit einem Einstellmechanismus zum Antreiben eines Reibbelags (26) in Richtung und weg von einem Scheibenbremsenrotor (12), um ein vorbestimmtes Lüftspiel zwischen einem Rotor und einem Reibbelag beizubehalten, wenn eine Bremse nicht angelegt ist;
ein Versatzmessmittel (82); und
einen Regler (80), wobei der Regler so programmiert ist, um den Bremsenversatz zu bestimmen, bei welchem eine vorbestimmte Last auf einem Reibbelag auf Grund des Kontakts mit dem Rotor erzielt wird, wobei die vorbestimmte Last aus einem Parameter des elektrischen Einstellmotors bestimmt wird,
wobei das System programmiert ist, um den Bremsenversatz zu messen, während die Bremse freigegeben ist; **dadurch gekennzeichnet, dass** die vorbestimmte Last aus einem Motorstromparameter des elektrischen Einstellmotors bestimmt wird.

2. System nach Anspruch 1, wobei das den Bremsenversatz messende Mittel ein Hubsensor (82) zum Messen des Versatzes einer betriebenen Welle einer Bremse ist.

3. System nach jedem vorangehenden Anspruch, des Weiteren umfassend einen Lösesensor, um zu bestimmen, wenn das Lösen der Bremse beginnt.

4. System nach jedem vorangehenden Anspruch, welches programmiert ist, um dem Motor zu signalisieren anzulaufen, sobald die Bremse gelöst ist, um das Lüftspiel einzustellen.

5. System nach Anspruch 4, des Weiteren umfassend ein Messmittel für den Einstellungsmechanismus (44), um das Ausmaß der Einstellung, welche durch den Motor angelegt wird, zu überwachen.

6. System nach jedem vorangehenden Anspruch, so programmiert, um eine Einstellung auszuführen, welche auf einem vorbestimmten Verhältnis der Bremsenanwendungen beruht, wobei das Verhältnis geringer als eins ist.

7. Bremse, welche ein System nach jedem vorangehenden Anspruch umfasst.

8. Verfahren zum Bestimmen des Versatzes einer Bremse (8), bei welchem eine vorbestimmte Last auf einem Reibbelag erzielt wird, wobei die Bremse ein Bremsbetätigungsglied (15), einen Reibbelag (26), einen Rotor (12), einen Bremsenversatzsensor (82) einen Regler (80) und einen Einstellmechanismus umfasst, welcher einen elektrischen Einstellmotor (40) aufweist, wobei das Verfahren die Schritte umfasst:
i) Signalisieren zum Antrieb an den Motor, während eine Kraft vorliegt, welche zwischen dem Rotor und dem Reibbelag während des Lösens der Bremse wirkt;
ii) Überwachen des Stroms des Motors, während die Bremse gerade gelöst wird, um zu bestimmen, ob eine vorbestimmte Last auf dem Reibbelag erzielt wird; und
iii) Bestimmen des Bremsenversatzes, bei welchem die Last erzielt wird.

9. Verfahren nach Anspruch 8, des Weiteren umfassend einen Schritt des Vergleichens des Bremsenversatzes bei der vorbestimmten Last mit Bremsversatz bei einem Rest- oder lastlosen Zustand, um das Ausmaß der Bremseinstellung zu bestimmen, die erforderlich ist, um ein vorbestimmtes Lüftspiel zwischen dem Rotor und dem Reibbelag zu erzielen.

10. Verfahren nach Anspruch 9, des Weiteren umfassend den Schritt des dem Motor Signalisierens, um den Einstellungsmechanismus einzustellen, um das vorbestimmte Lüftspiel wieder herzustellen, sobald die Bremse vollständig gelöst ist.

## Revendications

1. Système de commande pour mécanisme de réglage de frein (8) à disque, le système comportant :
un moteur électrique (40) de réglage destiné à être relié fonctionnellement à un mécanisme de réglage pour rapprocher et éloigner une garniture (26) de frottement d'un rotor (12) de frein à disque afin de maintenir un jeu de fonctionnement prédéterminé entre un rotor et une garniture de frottement lorsqu'un frein n'est pas actionné ;
un moyen (82) de mesure de déplacement ; et
un dispositif (80) de commande, le dispositif de commande étant programmé pour déterminer le déplacement du frein pour lequel une charge prédéterminée sur une garniture de frottement est obtenue du fait du contact avec le rotor, la charge prédéterminée étant déterminée à partir d'un paramètre du moteur électrique de réglage,
le système étant programmé pour mesurer le déplacement du frein lorsque le frein est en cours de relâchement ; **caractérisé en ce que** la charge prédéterminée est déterminée à partir d'un paramètre de courant moteur du moteur électrique de réglage.

2. Système selon la revendication 1, le moyen de mesure de déplacement du frein étant un capteur (82) de course destiné à mesurer le déplacement d'un axe d'action de frein.

3. Système selon l'une quelconque des revendications précédentes, comportant en outre un capteur de relâchement destiné à déterminer l'instant où le relâchement du frein commence.

4. Système selon l'une quelconque des revendications précédentes, programmé pour envoyer au moteur un signal d'entraînement une fois le frein relâché de façon à régler le jeu de fonctionnement.

5. Système selon la revendication 4, comportant en outre un moyen (44) de mesure du mécanisme de réglage destiné à contrôler l'amplitude du réglage appliqué par le moteur.

6. Système selon l'une quelconque des revendications précédentes, programmé de façon à réaliser un réglage sur la base d'une proportion prédéterminée d'applications du frein, la proportion étant inférieure à l'unité.

7. Frein intégrant un système selon l'une quelconque des revendications précédentes.

8. Procédé de détermination du déplacement d'un frein (8) au niveau duquel une charge prédéterminée sur une garniture de frottement est obtenue, le frein comportant un actionneur (15) de frein, une garniture (26) de frottement, un rotor (12), un capteur (82) de déplacement du frein , un dispositif (80) de commande et un mécanisme de réglage comprenant un moteur électrique (40) de réglage, le procédé comportant les étapes consistant à :
i) envoyer au moteur un signal d'entraînement tandis qu'il existe une force agissant entre le rotor et la garniture de frottement pendant le relâchement du frein ;
ii) contrôler le courant du moteur tandis que le frein est en cours de relâchement afin de déterminer si une charge prédéterminée sur la garniture de frottement est obtenue ; et
iii) déterminer le déplacement du frein pour lequel la charge est obtenue.

9. Procédé selon la revendication 8, comportant en outre une étape consistant à comparer le déplacement du frein à la charge prédéterminée et le déplacement du frein à l'état de repos ou à vide pour déterminer l'amplitude du réglage de frein nécessaire pour obtenir un jeu de fonctionnement prédéterminé entre le rotor et la garniture de frottement.

10. Procédé selon la revendication 9, comportant en outre une étape consistant à envoyer au moteur un signal de réglage du mécanisme de réglage afin de rétablir le jeu de fonctionnement prédéterminé une fois le frein entièrement relâché.
